# DEMANDE DE BREVET EUROPEEN

(11) **EP 1 120 583 A1**
(43) Date de publication de la demande: **01.08.2001**
(21) Numéro de dépôt: 01460005.0
(22) Date de dépôt: 18.01.2001
(51) Int. Cl.: F16H 1/32

(54) **Réducteur à roue orbitale**

(30) Priorité: 25.01.2000 FR 0000894
(71) Demandeur: Baranger, Claude, 37540 Saint Cyr sur Loire (FR)
(72) Inventeur: Baranger, Claude, 37540 Saint Cyr sur Loire (FR)

(57) **Abrégé**

Dispositif pour réaliser des modules rotatifs très compacts qui comportent une réduction de vitesse de type planétaire à roue orbitale.

L'invention concerne les mécanismes à engrenages comportant un arbre d'entrée (7) moteur, un arbre de sortie (5) coaxial à l'arbre d'entrée (7). Cet arbre d'entrée (7) comporte un excentrique qui fait rouler une roue orbitale (4) dentée 4 (1) dans une couronne (3) comportant une denture intérieure. Cette roue orbitale (4) est associée à une couronne ou un deuxième pignon 4 (3) comportant aussi une denture qui entraîne dans sa rotation relative un pignon ou une couronne 5 (2) dentée intérieurement et associée à l'arbre de sortie (5).

Ce mécanisme est particulièrement destiné aux utilisateurs de réducteurs de vitesse réalisés pour la mise en rotation d'organes de machines.

## Description

L'invention concerne les mécanismes à engrenages comportant un arbre d'entrée (7) moteur, un arbre de sortie 5 coaxial à l'arbre d'entrée (7). Cet arbre d'entrée (7) comporte un excentrique qui fait rouler une roue orbitale (4) dentée 4 (1) dans une couronne (3) comportant une denture intérieure. Cette roue orbitale (4) est associée à une deuxième couronne 4 (2) ou un deuxième pignon 4 (3) comportant aussi une denture qui entraîne dans sa rotation relative un pignon 5 (1) ou une roue 5 (2) dentée associée à l'arbre de sortie (5).

### Historique de l'invention

Ce type de mécanisme est déjà décrit partiellement dans FR A 2592121, EP O 315 609 A1 et WO 9604493A1. Le dernier concerne une denture particulière obtenue par décalage important des diamètres primitifs et taillée dans la couronne afin d'améliorer les problèmes d'interférences liées à cette disposition du pignon à l'intérieur de la couronne, le second se rapporte exclusivement à une roue orbitale faisant partie intégrante de la bague extérieure d'un roulement à bille, le premier se limite exclusivement à une roue orbitale comportant des dentures dans un même plan axial. Ces trois propositions n'ont pas trouvé d'applications industrielles connues car elles ne permettent pas la réalisation d'une gamme complète et homogène comme nous pouvons le faire par les améliorations mentionnées ci-dessous.

### But et caractéristiques essentielles de l'invention.

L'intérêt économique de ces mécanismes à engrenages réducteur de vitesses est de pouvoir constituer pour chaque taille, et avec une même disposition une gamme de réduction la plus large possible correspondant à un besoin et de pouvoir transmettre des moments identiques voir même supérieurs aux mécanismes existants sur le marché tout en restant réalisable avec les moyens traditionnels. Une étude approfondie montre la nécessité de disposer de pignon et de roue les plus grands possibles dans un encombrement limité afin d'avoir des efforts minimaux sur la denture et sur les roulements. Par conséquent la durée de vie sur ces derniers devient acceptable et permet à l'ensemble d'être exploitable industriellement. Ces conditions impliquent la disposition des dentures dans des plans décalés axialement pour réduire les efforts, elles peuvent être aussi décalées radialement pour permettre la réalisation d'une gamme de réduction suffisante avec une disposition identique tout en utilisant pour palier à l'usure, des roulements interchangeables de fortes dimensions. Ces roulements sont disposés de façon à s'opposer aux efforts tangentiels dus aux moments à transmettre ainsi qu'au moment de renversement lié au décalage axial. L'engrènement est réalisé avec une denture à développante de cercle. Le problème des interférences est résolu de façon très conventionnelle en limitant la hauteur de la saillie de la denture associée à un angle de pression préservant le rendement. La faible hauteur de dent en contact conduit à l'obligation de maîtriser le nombre de dents en prise pour avoir des pressions de contact acceptables avec les règles de l'art, ce dernier point est réalisé par le choix de la déformée de la dent sous un effort donné associé au décalage des dents en fonction des différents intervalles entre la couronne et le pignon retenus pour la réduction, cette déformée est fonction de deux facteurs, le choix de la hauteur du pied de dent, ainsi que le choix de la largeur de la dent. Le nombre de dents en prise est limité de façon à s'assurer d'un glissement au contact compatible avec les valeurs admissibles habituellement.

Par convention et pour la simplification du texte suivant, les pignons décrits ci dessous seront tous avec des dentures orientées vers l'extérieur, les couronnes seront toutes avec des dentures tournées vers l'intérieur.

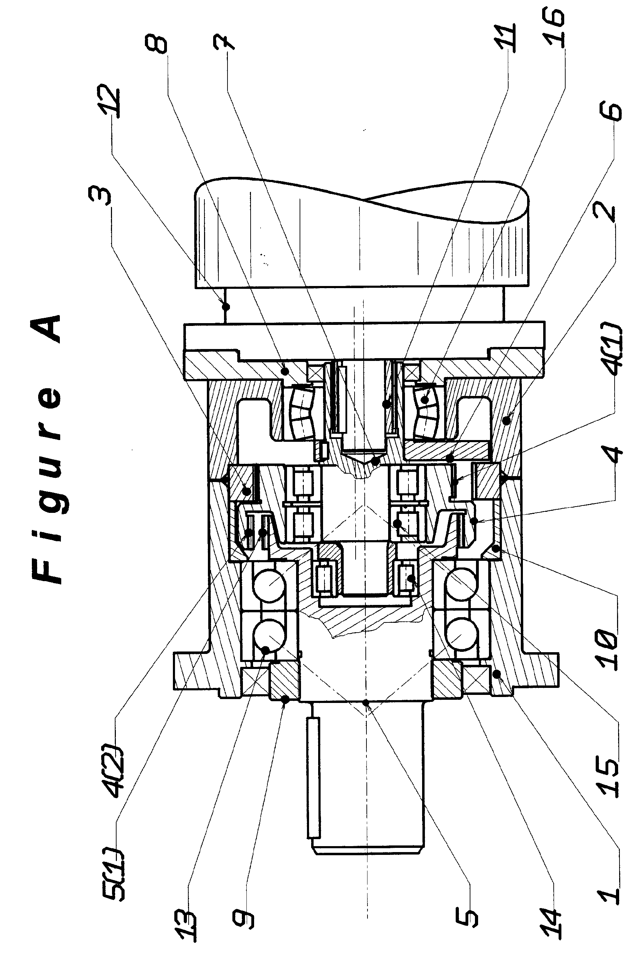

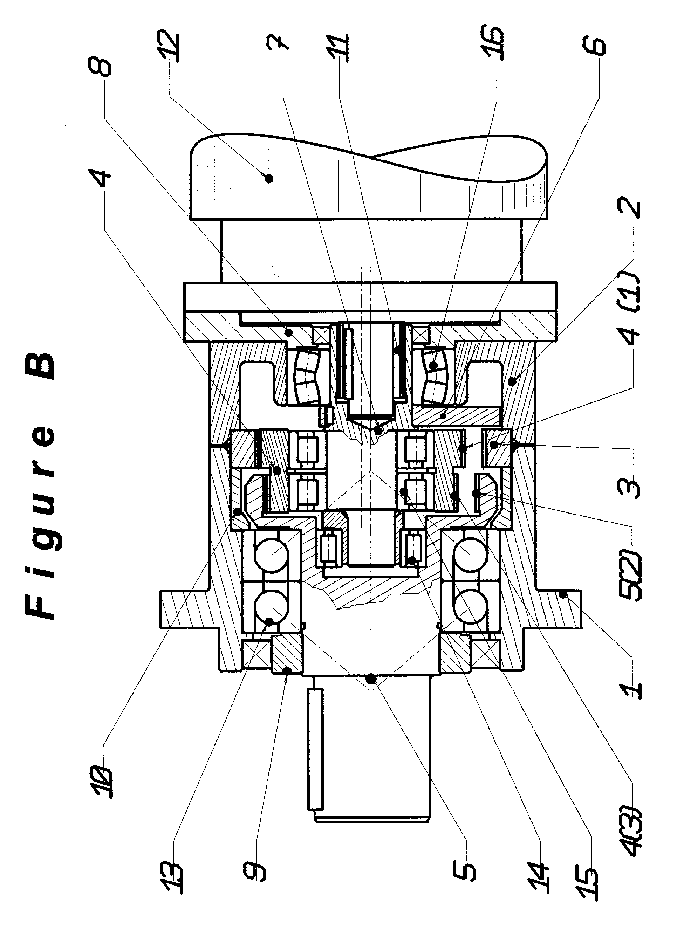

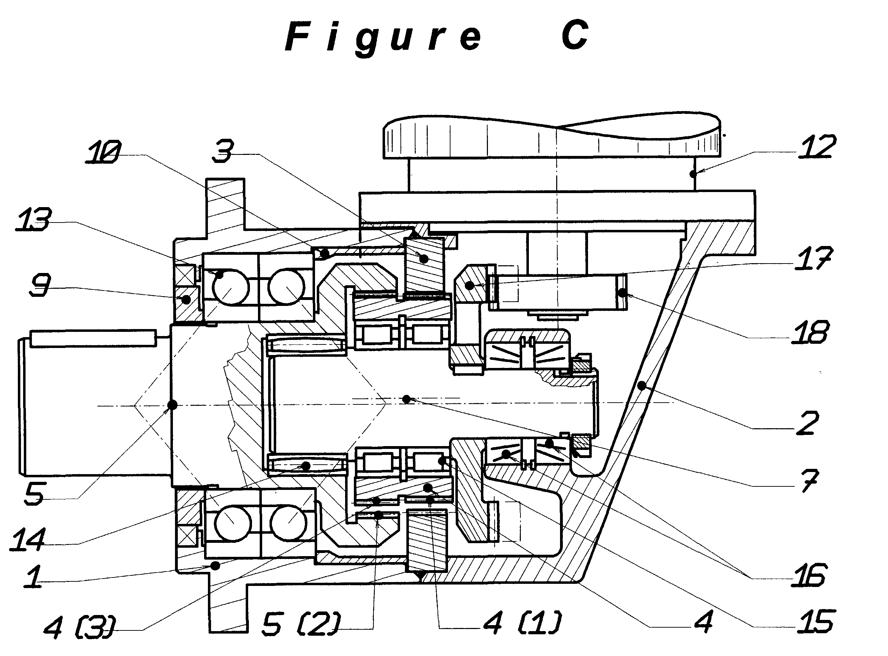

### Description de la figure selon A.

La figure représente un réducteur comportant une roue orbitale constituée d'un pignon 4 (1) et d'une couronne 4 (2) , un arbre de sortie (5) avec un pignon 5 (1), un arbre d'entrée rapide (7).

### Description de la figure selon B.

La figure représente un réducteur comportant une roue orbitale constituée d'un pignon 4 (1) et d'un second pignon 4 (3) , un arbre de sortie (5) avec une couronne 5 (2), un arbre d'entrée rapide (7).

### Description de la figure selon C.

La figure représente un réducteur comportant une roue orbitale constituée d'un pignon 4 (1) et d'une couronne 4 (2), un arbre de sortie (5) avec un pignon 5 (1), l'arbre d'entrée rapide (7) est entraîné par un train primaire assurant la liaison avec le moteur.

### Description des réalisations.

Le mécanisme des figures A et B et C consiste en un arbre d'entrée (7) relié au moteur soit par une douille cannelée de liaison (11), soit par un train d'engrenages intermédiaire à axes parallèles ou orthogonaux comme sur la figure C et composé, d'un pignon (17) relié par clavette et porté par l'arbre (7) et façonné de manière à assurer l'équilibrage tel que la pièce (6) des figures A et B et d'un petit pignon (18) monté sur l'arbre du moteur (12). L'arbre (7) des figures A et B et C est porté par un roulement (14) monté dans l'arbre de sortie et par un roulement ou un jeux de roulements (16) montés dans le châssis fixe (2). Cet arbre (7) dit d'entrée est muni d'une partie excentrée définie par la moitié de la différence entre les pignons et couronne associés entre (3) et (4) ou entre (4) et (5). Cette partie excentrée porte des roulements de forte dimension qui font rouler le pignon 4 (1) à denture extérieure de la roue dite orbitale à l'intérieure de la couronne à denture intérieure (3) fixée au châssis (1) et (2). La roue orbitale (4) est munie selon la figure A d'une couronne 4 (2) à denture intérieure qui est maintenue au contact du pignon (5) à denture extérieure de l'arbre de sortie par l'excentrique de l'arbre (7) d'entrée, ce contact s'établit approximativement à 180° du contact entre (3) et 4 (1), la différence de nombre de dents entre 4 (2) et (5) est identique à celle entre 4 (1) et (3) (cette description de la roue orbitale (4) ayant une couronne 4 (2) est aussi applicable à la figure selon C ). Selon la figure A nous obtenons les petits et moyens rapports de réduction, la disposition de la figure C autorise des vitesses de moteurs plus rapides, et complète pour ce cas celles des figures A et B. Les figures B et C diffèrent en ce que la roue orbitale (4) est munie d'un deuxième pignon 4 (3) à denture extérieure qui est maintenue au contact de la couronne (5) à denture intérieure 5 (2) de l'arbre de sortie par l'excentrique de l'arbre (7) d'entrée, ce contact s'établit approximativement dans le même plan que le contact entre (3) et 4 (1), la différence du nombre de dents entre 4 (3) et 5 (2) est identique à celle entre 4 (1) et (3). Selon la figure B nous obtenons des rapports de réduction de valeurs moyennes à des valeurs très élevées en complément des réductions réalisables de la figure A. Ces dispositions des figures A et B réalisent donc des rapports de réduction des plus petits aux plus grands et constituent ainsi une gamme complète tout en limitant rationnellement le nombre des éléments de base pour une exploitation industrielle économique (voir l'exemple joint). L'arbre de sortie des figures A et B et C est maintenu au châssis par un roulement à quatre contacts, ou une paire de roulements à contacts obliques, ces différents montages donnent à l'ensemble une grande compacité tout en assurant une réaction directe aux efforts des liaisons de la transmission. La liaison avec l'organe entraîné est définie à la demande selon les modes habituels. Dans les figures A et B la liaison par douille cannelée permet d'assurer selon les règles de l'art la liaison avec un arbre d'entrée (7) toujours identique et des arbres moteurs différents, seul l'alésage de la douille (11) est adaptée à l'arbre moteur. De la même façon la bride porte joint (8) est adaptée à la bride du moteur et est relié au châssis (2) qui reste toujours identique.

### Exemple des réductions qui sont possibles à partir d'un nombre d'éléments limités.

### 1) selon la disposition de la figure A.

Nombre de dents de la roue (3).
104, 108, 110, 112, 120, 124.
Nombre de dents du pignon 4(1).
102, 104, 105, 110, 116, 122.
Nombre de dents de la roue 4(2).
102, 104, 105, 110, 116, 122.
Nombre de dents du pignon 5(1).
96, 98, 100, 120.
Soit 8 rapports de réduction obtenus avec 16 pièces.
5-6-7-8-10-15-25-30.

### 2) selon la disposition de la figure B.

Nombre de dents de la roue (3) .
100, 101, 102, 103, 104, 105, 106, 107, 108.
Nombre de dents du pignon 4(1).
88, 89, 90, 91, 92, 99.
Nombre de dents du pignon 4 (3).
75, 76, 78, 79, 80, 82, 83, 84, 85, 86, 87, 88, 89, 90, 98.
Nombre de dents de la roue 5(2).
87, 88, 89, 90, 91, 92, 93, 94, 95, 96, 97, 98, 99, 100,
101, 102, 103, 104, 105, 106, 107.
Soit 26 rapports de réduction obtenus avec 49 pièces.
49-54-66-74-84-93-104-116-132-153-180-219-276-372-564-726-801-891-1177-1312-1485-1716-2039-2525-3333-4950.

## Revendications

1. Mécanisme avec des engrenages à dentures en développante de cercle qui comporte, un arbre dit d'entrée (7) muni d'un excentrique et construit en une seule pièce, un arbre de sortie (5) coaxial à l'arbre d'entrée et muni d'une denture en pignon 5(1) ou en couronne 5(2), ledit arbre (5) et la denture sont constitués en une seule pièce, une couronne dentée (3) reliée au châssis fixe (1), une roue (4) en une seule pièce avec deux dentures et montée sur la partie excentrée de l'arbre d'entrée, l'une des dentures (pignon 4(1)) engrenant avec la couronne dentée reliée au châssis fixe, la seconde denture (pignon 4(1) ou couronne 4(2)) engrenant respectivement avec la denture (couronne ou pignon) de l'arbre de sortie (5)est mise en rotation par l'arbre d'entrée (7) excentrée et relié à ce dernier par des roulements (15) de fortes dimensions interchangeables, l'excentrique de l'arbre d'entrée (7) est mobile en rotation et maintenue par des roulements (16) et (14) liés au châssis fixe(2) et à l'arbre de sortie (5), la roue (4) à deux dentures est le seul moyen d'entraînement entre ledit arbre d'entrée (7) et ledit arbre de sortie (5) caractérisé en ce qu'un des roulements de l'arbre d'entrée (7) situé dans le même plan axial qu'un roulement (13)de l'arbre de sortie (5),ou bien à l'intérieur des deux plans axiaux définis par les appuis des roulements (13).

2. Mécanisme selon la revendication 1 caractérisé en ce que la disposition axiale de l'arbre d'entrée (7), de l'arbre de sortie (5), de la roue (4) à deux dentures et de la couronne fixe (3) par rapport aux autres éléments est la même quelle que soit la constitution ( pignon/pignon )ou (pignon/couronne )de la roue (4) excentrée et respectivement couronne ou pignon de l'arbre de sortie (5).

3. Mécanisme selon les revendications 1 et 2 caractérisé en ce que l'arbre d'entrée (7) est entraîné par un train d'engrenages primaire (17) et (18) à axes parallèles ou orthogonaux et qui assure la liaison avec l'arbre moteur (12).

4. Mécanisme selon les revendications 1,2,3 caractérisé en ce que les pièces repérées (1) et (3) et (4) et (5) et (9) et (10) sont identiques.
